# EUROPÄISCHE PATENTSCHRIFT

(11) **EP 3 232 849 B1**
(45) Veröffentlichungstag und Bekanntmachung des Hinweises auf die Patenterteilung: **09.10.2019**
(21) Anmeldenummer: 15810664.1
(22) Anmeldetag: 17.12.2015
(51) Int. Cl.: A44B 11/25

(54) **BELEUCHTETES GURTSCHLOSS**
ILLUMINATED SEAT BELT BUCKLE
BOUCLE DE CEINTURE LUMINEUSE

(30) Priorität: 19.12.2014 DE 102014226587; 14.04.2015 DE 102015206602
(43) Veröffentlichungstag der Anmeldung: 25.10.2017
(73) Patentinhaber: Volkswagen Aktiengesellschaft, 38440 Wolfsburg (DE)
(72) Erfinder: EFFENBERGER, Witali, 38176 Wendeburg (DE)
(86) Internationale Anmeldenummer: PCT/EP2015/080144
(87) Internationale Veröffentlichungsnummer: WO 2016/097089

(56) Entgegenhaltungen:
- WO-A1-2016/008585
- DE-A1-102009 047 937
- DE-U1-202004 007 872
- GB-A- 2 244 085
- US-A- 3 568 268
- US-A- 4 237 586
- US-A1- 2012 089 302

## Beschreibung

Die Erfindung betrifft ein beleuchtetes Gurtschloss für einen Sicherheitsgurt, insbesondere eines Kraftfahrzeuges, mit einem Schlossgehäuse, einer Verriegelungsmechanik, einem Einführschlitz für eine Gurtzunge des Sicherheitsgurtes, einer Betätigungstaste zur Entriegelung und mit einer zumindest eine Lichtquelle aufweisenden und im Schlossgehäuse angeordneten Beleuchtungseinrichtung nach dem Oberbegriff des Hauptanspruchs.

Ein für ein Zurückhalten des Körpers eines Fahrzeuginsassen vorgesehener Sicherheitsgurt wird üblicherweise dadurch angelegt, dass eine mit dem Sicherheitsgurt verbundene Gurtzunge in einen Einführschlitz eines Gurtschlosses eingesteckt und durch eine Verriegelungsmechanik in dem Gurtschloss verriegelt wird. Für das Entriegeln ist eine Betätigungstaste am Gurtschloss vorgesehen. Bei Dunkelheit ist es für den Fahrzeuginsassen schwierig, den Einführschlitz des Gurtschlosses aufzufinden, um die Gurtzunge in das Gurtschloss einzustecken. Aus diesem Grund sind bereits unterschiedliche Lösungen vorgeschlagen worden, bei welchen eine Beleuchtungseinrichtung in das Gurtschloss eingebaut ist, um den die Gurtzunge aufnehmenden Einführschlitz im Gurtschloss bei Dunkelheit zu beleuchten.

Die gattungsgemäße WO 2016/008585 A1 beschreibt bereits ein solches beleuchtetes Gurtschloss für einen Sicherheitsgurt. Dabei weist das Schlossgehäuse eine lichtdurchlässige und ringförmig geschlossene Lichtaustrittsöffnung auf, aus welcher das von der Beleuchtungseinrichtung bereitgestellte und eingekoppelte Licht austritt und welche die Betätigungstaste und den Einführschlitz umlaufend umschließt. Weiterhin weist das Schlossgehäuse eine stirnseitig angeordnete, ringförmig geschlossene und eine Öffnung für die Betätigungstaste und den Einführschlitz aufweisende Abdeckschale auf. Dabei ist die Lichtaustrittsöffnung in der Abdeckschale angeordnet.

Die US 2012/0089302 A1 offenbart ebenfalls bereits ein beleuchtetes Gurtschloss für einen Sicherheitsgurt. Dabei weist weder das Schlossgehäuse eine stirnseitig angeordnete, ringförmig geschlossene Abdeckschale auf noch ist die Lichtaustrittsöffnung in der Abdeckschale angeordnet.

Aus der DE 10 2011 114 538 A1 ist beispielsweise bereits ein Gurtschloss mit einer Beleuchtungseinrichtung zur Kennzeichnung des Einführschlitzes für die Gurtzunge bekannt. Die im Schlossgehäuse angeordnete Beleuchtungseinrichtung besteht aus einer Lichtquelle und einem Lichtleiter. Der das von der Lichtquelle erzeugte Licht aufnehmende und verteilende Lichtleiter ist dabei derart in dem Einführschlitz angeordnet, dass eine vorderseitige Abstrahlfläche des Lichtleiters bündig mit dem Schlossgehäuse abschließt. Die Abstrahlfläche des Lichtleiters ist also sichtbar in dem Einführschlitz des Gurtschlosses angeordnet. Von der vorderseitigen Abstrahlfläche verläuft der Lichtleiter keilförmig in Richtung der Lichtquelle.

Hierbei erweist es sich als nachteilig, dass die aus der Lichtquelle und dem Lichtleiter bestehende Beleuchtungseinrichtung unmittelbar in dem Bereich des Gurtschlosses angeordnet ist, in welchen auch die Gurtzunge eingesteckt werden soll. Hierdurch kann es beim Einstecken der Gurtzunge in das Gurtschloss zu Beschädigungen an der Beleuchtungseinrichtung kommen. Durch die für den Fahrzeuginsassen sichtbare Anordnung der Abstrahlfläche des Lichtleiters ergibt sich eine direkte, inhomogene und qualitativ nicht besonders hochwertige Beleuchtung des Einführschlitzes. Außerdem wird durch die Anordnung des Lichtleiters und der Lichtquelle im Bereich des Einführschlitzes auch das Innere des Gurtschlosses beleuchtet, sodass der Fahrzeuginsasse bei Dunkelheit die Einzelheiten der Verriegelungsmechanik inklusive eventuell vorhandener Verschmutzungen im Schlossinneren erkennen kann. Zudem muss für die Beleuchtungseinrichtung zusätzlicher Bauraum zur Verfügung gestellt werden, welcher insbesondere im Bereich des Einführschlitzes ohnehin schon knapp ist. Wenn die Gurtzunge in dem Gurtschloss angeordnet und verriegelt ist, ist der Lichtleiter der Beleuchtungseinrichtung nahezu vollständig durch die Gurtzunge selbst und den mit der Gurtzunge verbundenen Sicherheitsgurt verdeckt, sodass die Abstrahlfläche des Lichtleiters für den Fahrzeuginsassen nicht erkennbar ist. Die Beleuchtungseinrichtung dient also ausschließlich zum Auffinden des Gurtschlosses während eines Einsteckvorganges der Gurtzunge, nicht aber für das Auffinden des Gurtschlosses bzw. der Betätigungstaste bei einer Entriegelung der Gurtzunge.

Ferner sind beleuchtete Gurtschlösser aus der DE 10 2009 047 937 A1, der US 4,237,586 A, der GB 2 244 085 A, der US 3,568,268 A sowie der DE 20 2004 007 872 U1 bekannt.

Vor diesem Hintergrund liegt der Erfindung die Aufgabe zugrunde, eine hochwertige homogene Beleuchtung für ein Gurtschloss zur Verfügung zu stellen, welche eine Benutzung des Gurtschlosses bei Dunkelheit erleichtert.

Diese Aufgabe wird gelöst mit einem beleuchteten Gurtschloss gemäß den Merkmalen des Patentanspruches 1. Die Unteransprüche betreffen besonders zweckmäßige Weiterbildungen der Erfindung.

Erfindungsgemäß ist also ein beleuchtetes Gurtschloss für einen Sicherheitsgurt vorgesehen, bei welchem die Beleuchtungseinrichtung einen Lichtleiter aufweist, welcher das von der Lichtquelle ausgehende Licht aufnimmt und in die Lichtaustrittsöffnung einkoppelt, wobei der Lichtleiter und die aus einer Platine und zumindest einer LED bestehende Lichtquelle eine integrale Baueinheit bilden. Hierdurch kann ein von einer einzigen vergleichsweise relativ kleinen Lichtquelle erzeugtes Licht derart verteilt werden, dass ein verhältnismäßig großer Bereich gut beleuchtet wird. Außerdem wird das Licht durch den Lichtleiter an die Stellen des Gurtschlosses geleitet, welche ausgeleuchtet werden sollen, während die Lichtquelle inklusive der Verkabelung an den Stellen des Gurtschlosses angeordnet sein können, wo ein entsprechender Bauraum sowohl zur Anordnung bzw. Fixierung als auch zur Verkabelung zur Verfügung steht. Weiterhin ist gewährleistet, dass die LED nach der Montage der Baueinheit in dem Schlossgehäuse in der erforderlichen Position und Lage relativ zu einem Einkoppelabschnitt des Lichtleiters angeordnet ist. Außerdem wird die Montage der Lichtquelle und des Lichtleiters in dem Gurtschloss vereinfacht und es kann auf ein separates Gehäuse für die Platine bzw. Lichtquelle verzichtet werden. Die Funktion des Gehäuses der Platine, insbesondere ein Staub- und Wasserschutz, wird dann durch das Schlossgehäuse des Gurtschlosses selbst gewährleistet.

Dabei wird durch die ringförmig geschlossene Lichtaustrittsöffnung ein optisch hochwertiges und homogen beleuchtetes Gurtschloss zur Verfügung gestellt und eine indirekte Beleuchtung des Einführschlitzes und der Betätigungstaste bei Dunkelheit gewährleistet. Die Benutzung des Gurtschlosses wird bei Dunkelheit insbesondere dadurch erleichtert, dass der Einführschlitz und die Betätigungstaste von der ringförmigen Lichtaustrittsöffnung vollumfänglich umschlossen sind. Hierdurch wird sowohl das Auffinden des Einführschlitzes beim Einsteckvorgang der Gurtzunge in das Gurtschloss als auch das Auffinden der Betätigungstaste beim Entriegelungsvorgang gewährleistet.

Üblicherweise besteht das Schlossgehäuse von Gurtschlössern aus mindestens zwei zusammengefügten Gehäuseschalen, sodass die Stirnseite des Gurtschlosses, in welcher der Einführschlitz und die Betätigungstaste angeordnet sind, zwangsläufig auch eine sichtbare und haptisch wahrnehmbare Trennfläche bzw. Nut aufweist. Durch die ringförmig geschlossen ausgebildete Abdeckschale weist das erfindungsgemäße Gurtschloss nunmehr keine sichtbare und haptisch wahrnehmbare Trennfläche bzw. Nut mehr auf. Außerdem wird hierdurch die mechanische Belastbarkeit des Schlossgehäuses bzw. des Gurtschlosses im Vergleich zu den üblicherweise verwendeten zweiteiligen Gurtschlössern verbessert. Durch die Anordnung der ebenfalls ringförmig ausgebildeten Lichtaustrittsfläche in der Abdeckschale wird ein gleichmäßiger Lichtaustritt und eine ringförmig geschlossene um den Einführschlitz und die Betätigungstaste herum geführte Lichtlinie erzeugt.

Die Abdeckschale kann aus dem gleichen Material wie das Schlossgehäuse bestehen. Üblicherweise bestehen die Schlossgehäuse von Gurtschlössern aus einem spritzgießfähigen harten Kunststoff. Für die Abdeckschale kann allerdings auch ein vom Schlossgehäuse abweichendes Material verwendet werden. Denkbar ist auch, dass die Abdeckschale eine andere Farbe oder eine andere Oberflächenstruktur als das Schlossgehäuse aufweist. Hierbei kann die Abdeckschale zum Beispiel auf die Farbe oder das Material der jeweiligen Innenverkleidung des Fahrzeuges abgestimmt sein. Selbstverständlich kann die Abdeckschale und/oder das Schlossgehäuse auch mit einer Dekorbeschichtung, beispielsweise aus Leder, Kunstleder, Kunststoff, textilem Gewebe, Carbonfasergewebe, Lack oder Metall versehen sein.

Indem die Abdeckschale lösbar mit dem Schlossgehäuse verbunden ist,wird die Montage und Demontage des Gurtschlosses erleichtert sowie ein Austausch defekter Gurtschlossbauteile gewährleistet.

Weiterhin erweist es sich als besonders vorteilhaft, dass die Lichtaustrittsöffnung durch ein in der Abdeckschale angeordnetes Lichtstreuelement gebildet ist. Durch das Lichtstreuelement wird ein von der Lichtquelle erzeugtes und eingekoppeltes Licht gleichmäßig verteilt, sodass eine homogene Ausleuchtung des Gurtschlosses bei Dunkelheit gewährleistet werden kann.

Um ein unbeabsichtigtes Lösen des Lichtstreuelementes von der Abdeckschale, insbesondere bei einer äußeren mechanischen Belastung, zu verhindern, ist vorgesehen, dass das Lichtstreuelement und die Abdeckschale formschlüssig oder stoffschlüssig miteinander verbunden sind. Dabei kann die Fixierung beispielsweise durch eine Rastverbindung oder durch eine Klebeverbindung erfolgen.

Besonders vorteilhaft ist jedoch eine Ausgestaltung, nach welcher das Lichtstreuelement und die Abdeckschale einteilig ausgebildet sind. Hierbei kann das lichtdurchlässige Lichtstreuelement beispielsweise durch ein Zweikomponentenspritzgießverfahren direkt an die Abdeckschale angespritzt werden.

Ein weiteres erfindungsgemäßes Merkmal besteht auch darin, dass die Lichtquelle der Beleuchtungseinrichtung durch zumindest eine LED (Licht emittierende Diode) oder ein LED-Modul gebildet ist. Eine LED inklusive ihrer Platine benötigt einen vergleichsweise geringen Bauraum, sodass die Beleuchtung des Gurtschlosses keine Auswirkungen auf die konstruktive Ausgestaltung der anderen Gurtschlossbauteile, insbesondere der Verriegelungsmechanik hat. Neben dem geringen Platzbedarf bietet eine LED zusätzlich den Vorteil, dass diese sehr robust und wenig störanfällig sind. Die Ansteuerung der LED bzw. des LED-Moduls erfolgt vorzugsweise über einen LIN-Prozessor (LIN = Local Interconnect Network), der sich gemeinsam mit der LED auf der Platine befinden kann.

Eine besonders homogene Ausleuchtung des Gurtschlosses wird auch dadurch erreicht, dass der Lichtleiter einen ringförmig geschlossenen Ringabschnitt aufweist, welcher deckungsgleich zu der ringförmigen Lichtaustrittsöffnung angeordnet ist. Hierdurch wird gewährleistet, dass das vom Lichtleiter verteilte Licht gleichmäßig in die Lichtaustrittsöffnung eingekoppelt wird.

Dieser Effekt wird auch dadurch unterstützt, dass der Ringabschnitt des Lichtleiters zumindest teilweise an einer der Sichtseite abgewandten Rückseite des Lichtstreuelementes und/oder an einer der Sichtseite abgewandten Rückseite der Abdeckschale anliegt. Dadurch ist der lichtabstrahlende Lichtleiter in unmittelbarer Nähe zu der Lichtaustrittsöffnung in der Abdeckschale angeordnet.

Außerdem kann vorgesehen sein, dass der Ringabschnitt des Lichtleiters an das Lichtstreuelement oder die Abdeckschale angespritzt ist. Das Anspritzen kann beispielsweise durch ein Zweikomponentenspritzgießverfahren erfolgen. Dadurch, dass der Ringabschnitt des Lichtleiters an dem Lichtstreuelement oder einem benachbarten Bereich der Abdeckschale angespritzt ist, wird gewährleistet, dass der Ringabschnitt des Lichtleiters in einer definierten Lage relativ zur Lichtaustrittsöffnung angeordnet ist. Eine zusätzliche Fixierung des Lichtleiters ist entbehrlich, wodurch die Montage des Gurtschlosses wesentlich vereinfacht wird.

Ein weiteres erfindungsgemäßes Merkmal besteht auch darin, dass der Lichtleiter auf einer der Lichtaustrittsöffnung abgewandten Unterseite zumindest abschnittsweise eine lichtablenkende Struktur aufweist. Die beispielsweise aus mehrere Prismen zusammengesetzt bestehende Struktur sorgt dafür, dass das von der Lichtquelle bzw. LED in den Lichtleiter eingekoppelte Licht gezielt in eine gewünschte Lichtabstrahlrichtung, nämlich durch die Lichtaustrittsöffnung hindurch, abgelenkt wird.

Ein Ausleuchten der Verriegelungsmechanik und ein unkontrollierter und unerwünschter Austritt von Licht durch den Einführschlitz wird auch dadurch verhindert, dass zwischen der Lichtquelle und der Verriegelungsmechanik und/oder zwischen dem Lichtleiter und der Verriegelungsmechanik zumindest abschnittsweise eine lichtundurchlässige Trennwand vorgesehen ist.

Hierbei ist die Lichtquelle zwischen der Trennwand und dem Schlossgehäuse und der Ringabschnitt des Lichtleiters zwischen der Trennwand und der Abdeckschale angeordnet und fixiert. Die Trennwand wirkt also einerseits als Lichtbarriere zwischen den lichtabstrahlenden Mitteln und der Verriegelungsmechanik und sorgt andererseits gleichzeitig für eine prozesssichere Fixierung innerhalb des Gurtschlosses bzw. im Schlossgehäuse.

Dabei erweist es sich insbesondere für die Montage und Demontage des Gurtschlosses als besonders vorteilhaft, dass die Trennwand einteilig mit der Abdeckschale oder dem Schlossgehäuse verbunden ist. Hierdurch wird ein Durchtritt von Lichtstrahlen zwischen der Trennwand und dem jeweiligen Trägerteil wirkungsvoll unterbunden.

Zusammenfassend ergibt sich, dass durch die Erfindung ein Gurtschloss zur Verfügung gestellt werden kann, welches den hohen qualitativen und wirtschaftlichen sowie sicherheitstechnischen Anforderungen in der Automobilindustrie entspricht. Durch die ringförmig ausgebildete Lichtaustrittsöffnung wird ein Leuchtring bzw. eine Lichtlinie erzeugt, dessen/deren Geometrie entsprechend dem Design des jeweiligen Gurtschlosses angepasst werden kann. Die Beleuchtung des Gurtschlosses kann im Zusammenspiel mit allen Funktionen und Beleuchtungsvariationen im jeweiligen Fahrzeug angesteuert werden.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine perspektivische Darstellung eines beleuchteten Gurtschlosses;
- Fig. 2: ein geöffnetes Gurtschloss ohne Verriegelungsmechanik und Abdeckschale in einer gegenüber der Figur 1 anderen perspektivischen Ansicht;

- Fig. 3: ein geöffnetes Gurtschloss mit Verriegelungsmechanik und Abdeckschale in einer Seitensicht;
- Fig.4: eine zweite Ausführungsform eines Gurtschlosses in einer Ansicht gemäß Figur 3;
- Fig. 5: eine perspektivische Darstellung einer in Figur 4 abgebildeten und aus einem Lichtleiter und einer Lichtquelle bestehenden integralen Baueinheit;
- Fig. 6: einen Lichtleiter mit einer lichtablenkenden Struktur.

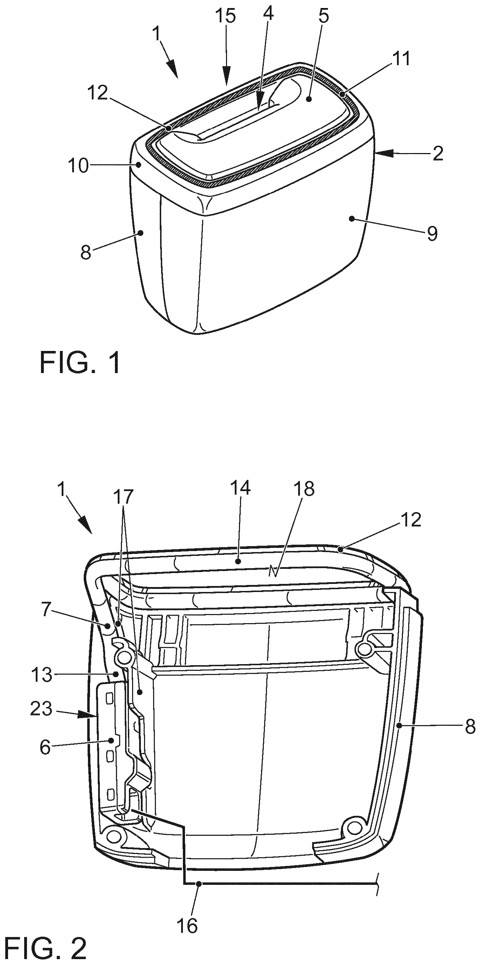

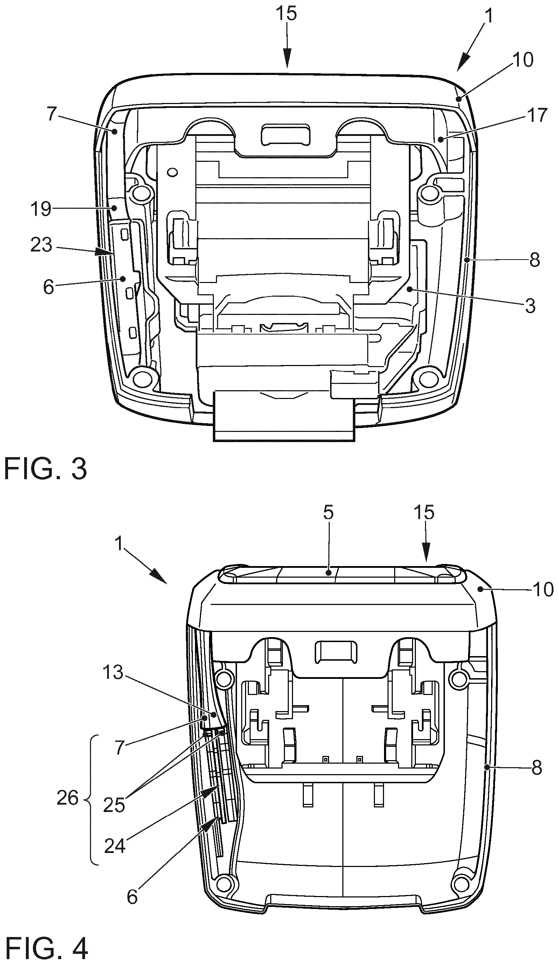

Das in den Figuren 1 bis 3 dargestellte beleuchtete Gurtschloss 1 weist ein Schlossgehäuse 2 auf, in welchem eine in Figur 3 zu erkennende Verriegelungsmechanik 3 angeordnet ist. Die Verriegelungsmechanik 3 dient der Aufnahme und Verriegelung einer durch einen Einführschlitz 4 im Schlossgehäuse 2 einsteckbaren und in den Figuren nicht dargestellten Gurtzunge eines Sicherheitsgurtes. Die Verriegelung erfolgt automatisch beim Einstecken der Gurtzunge in die Verrieglungsmechanik 3. Zur Entriegelung ist eine Betätigungstaste 5 vorgesehen. Bei einer manuellen Beaufschlagung der Betätigungstaste 5 mit einer Druckkraft, wird der Verriegelungszustand gelöst und die Gurtzunge wird aus der Verriegelungsmechanik 3 ausgeworfen.

Außerdem ist im Schlossgehäuse 2 eine zur Beleuchtung des Gurtschlosses 1 vorgesehene Beleuchtungseinrichtung angeordnet, welche aus einer als LED-Platine bzw. LED-Modul ausgebildeten Lichtquelle 6 und einem Lichtleiter 7 aus Kunststoff, beispielsweise PMMA (Polymethylmethacrylat) besteht (Figur 2). Die Lichtquelle 6 kann, wie in der Figuren 2 und 3 dargestellt, ein zusätzliches Gehäuse 23 innerhalb des Schlossgehäuses 2 aufweisen. Dieses zusätzliche Gehäuse 23 ist jedoch nicht unbedingt erforderlich.

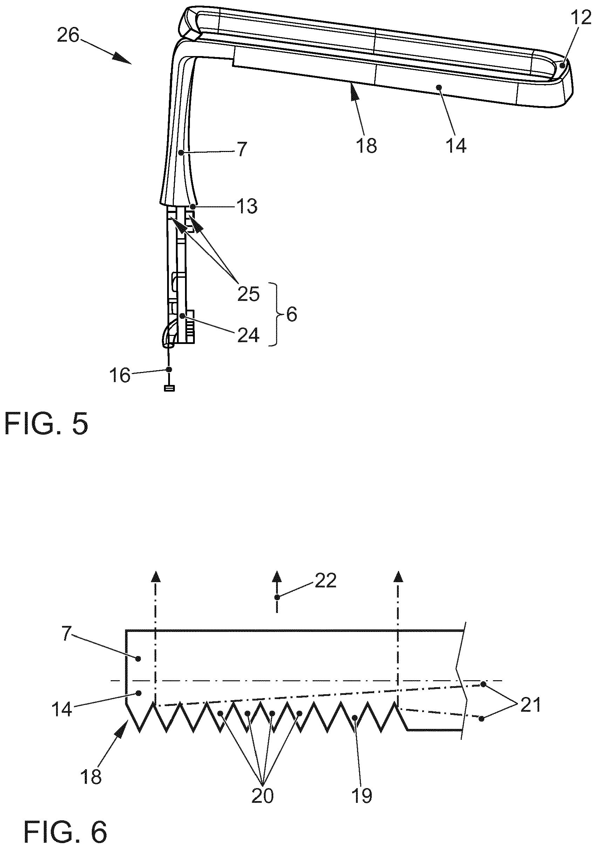

Figur 4 zeigt eine Ausführungsform des Gurtschlosses 1, bei welcher auf ein derartiges Gehäuse 23 für die Lichtquelle 6 verzichtet wurde. Die aus einer Platine 24 und zwei auf der Platine 24 angeordneten LEDs 25 bestehende Lichtquelle 6 und der Lichtleiter 7 bilden eine, auch in Figur 5 dargestellte, gemeinsam handhabbare integrale Baueinheit 26. Die Platine 24 weist also kein separates Gehäuse 23 auf, sondern ist unmittelbar am Schlossgehäuse 2 fixiert und/oder durch die Fixierung des Lichtleiters 7 bzw. der Baueinheit 26 im Schlossgehäuse 2 positioniert. Ein Staub- und Wasserschutz der Platine 24 wird bei dieser Ausführungsform des Gurtschlosses 1 durch ein entsprechend angepasstes Schlossgehäuse 2 gewährleistet.

Wie insbesondere der Figur 1 zu entnehmen ist, ist das Schlossgehäuse 2 dreiteilig aufgebaut und besteht aus zwei miteinander verbundenen Gehäuseschalen 8, 9 und einer mit den beiden Gehäuseschalen 8, 9 verbundenen und ringförmig geschlossenen Abdeckschale 10. Die Verbindung zwischen den beiden Gehäuseschalen 8, 9 und der Abdeckschale 10 kann beispielsweise durch eine lösbare Rastverbindung erfolgen. Die ringförmig geschlossene Abdeckschale 10 bildet eine Stirnseite des Gurtschlosses 1 bzw. des Schlossgehäuses 2 und weist eine Öffnung für die Betätigungstaste 5 und den Einführschlitz 4 auf. In der Abdeckschale 10 ist außerdem eine lichtdurchlässige und ringförmig geschlossene Lichtaustrittsöffnung 11 vorgesehen, aus welcher von der Beleuchtungseinrichtung bereitgestelltes Licht austritt. Die ringförmige Lichtaustrittsöffnung 11 umschließt dabei sowohl die Betätigungstaste 5 als auch den Einführschlitz 4 vollumfänglich. Die Lichtaustrittsöffnung 11 wird durch ein in Figur 2 zu erkennendes Lichtstreuelement 12, insbesondere aus Kunststoff, gebildet, welches in die Abdeckschale 10 eingelassen ist.

Um eine homogene Ausleuchtung des Gurtschlosses 1 zu gewährleisten, wird das von der Lichtquelle 6 bereitgestellte Licht in den Lichtleiter 7 eingekoppelt und von diesem gleichmäßig verteilt. Der Lichtleiter 7 weist hierzu einen der Lichtquelle 6 zugeordneten Einkoppelabschnitt 13 und einen der Lichtaustrittsöffnung 11 zugeordneten Ringabschnitt 14 auf (siehe Figur 2). Der Ringabschnitt 14 ist dabei deckungsgleich und konzentrisch zu der ringförmig ausgebildeten Lichtaustrittsöffnung 11 an einer einer Sichtseite 15 abgewandten Rückseite der Abdeckschale 10 in unmittelbarer Nähe zu der Lichtaustrittsöffnung 11 angeordnet.

Die als LED-Platine bzw. LED-Modul ausgebildete Lichtquelle 6 wird durch eine in Figur 2 angedeutete Leitung 16 mit elektrischem Strom versorgt und/oder von einem Prozessor angesteuert, der integriert sein kann. Um einen unerwünschten Lichtaustritt durch die Verriegelungsmechanik 3 bzw. den Einführschlitz 4 aus dem Gurtschloss 1 zu verhindern, sind der Lichtquelle 6 und dem Lichtleiter 7 lichtundurchlässige Trennwände 17 zugeordnet, welche zwischen der Verriegelungsmechanik 3 und der Lichtquelle 6 bzw. dem Lichtleiter 7 angeordnet sind. Der Ringabschnitt 14 des Lichtleiters 7 ist zwischen der Abdeckschale 10 und der einstückig mit der Abdeckschale 10 verbundenen Trennwand 17 angeordnet und fixiert, während die Lichtquelle 6 zwischen einer Außenwand einer Gehäusehälfte 8, 9 und einer mit der Gehäusehälfte 8, 9 einstückig verbunden Trennwand 17 angeordnet und fixiert ist.

Wie Figur 6 zu entnehmen ist, weist der Lichtleiter 7, insbesondere der Ringabschnitt 14, auf einer der Lichtaustrittsöffnung 11 abgewandten Unterseite 18 eine lichtablenkende Struktur 19 auf. Die Struktur 19 besteht dabei aus mehreren Prismen 20 und sorgt dafür, dass von der Lichtquelle 6 bzw. der LED 25 in den Leichtleiter 7 eingekoppelte und auf ein Prisma 20 auftreffende Lichtstrahlen 21 gezielt in eine gewünschte Lichtabstrahlrichtung 22, nämlich durch die in Figur 4 nicht dargestellte Lichtaustrittsöffnung 11 hindurch, abgelenkt werden.

**Bezugszeichenliste**

| | | | |
|---|---|---|---|
| 1 | Gurtschloss | 16 | Leitung |
| 2 | Schlossgehäuse | 17 | Trennwand |
| 3 | Verriegelungsmechanik | 18 | Unterseite |
| 4 | Einführschlitz | 19 | Struktur |
| 5 | Betätigungstaste | 20 | Prisma |
| | | | |
| 6 | Lichtquelle | 21 | Lichtstrahl |
| 7 | Lichtleiter | 22 | Lichtabstrahlrichtung |
| 8 | Gehäuseschale | 23 | Gehäuse |
| 9 | Gehäuseschale | 24 | Platine |
| 10 | Abdeckschale | 25 | LED |
| | | | |
| 11 | Lichtaustrittsöffnung | 26 | Baueinheit |
| 12 | Lichtstreuelement | | |
| 13 | Einkoppelabschnitt | | |
| 14 | Ringabschnitt | | |
| 15 | Sichtseite | | |

## Patentansprüche

1. Beleuchtetes Gurtschloss (1) für einen Sicherheitsgurt, mit einem Schlossgehäuse (2), einer Verriegelungsmechanik (3), einem Einführschlitz (4) für eine Gurtzunge des Sicherheitsgurtes, einer Betätigungstaste (5) zur Entriegelung und mit einer zumindest eine Lichtquelle (6) aufweisenden und im Gurtschloss (1) angeordneten Beleuchtungseinrichtung, wobei das Schlossgehäuse (2) eine lichtdurchlässige und ringförmig geschlossene Lichtaustrittsöffnung (11) aufweist, aus welcher das von der Beleuchtungseinrichtung bereitgestellte und eingekoppelte Licht austritt und welche die Betätigungstaste (5) und/oder den Einführschlitz (4) umlaufend umschließt, wobei das Schlossgehäuse (2) eine stirnseitig angeordnete, ringförmig geschlossene und eine Öffnung für die Betätigungstaste (5) und/oder den Einführschlitz (4) aufweisende Abdeckschale (10) aufweist, wobei die Lichtaustrittsöffnung (11) in der Abdeckschale (10) angeordnet ist und die Abdeckschale (10) lösbar mit dem Schlossgehäuse (2) verbunden ist, **dadurch gekennzeichnet, dass** die Beleuchtungseinrichtung einen Lichtleiter (7) aufweist, welcher das von der Lichtquelle (6) ausgehende Licht aufnimmt und in die Lichtaustrittsöffnung (11) einkoppelt, wobei der Lichtleiter (7) und die aus einer Platine (24) und zumindest einer LED (25) bestehende Lichtquelle (6) eine integrale Baueinheit (26) bilden.

2. Beleuchtetes Gurtschloss (1) nach Anspruch 1, **dadurch gekennzeichnet, dass** die Lichtaustrittsöffnung (11) durch ein in der Abdeckschale (10) angeordnetes Lichtstreuelement (12) gebildet ist.

3. Beleuchtetes Gurtschloss (1) nach Anspruch 2, **dadurch gekennzeichnet, dass** das Lichtstreuelement (12) und die Abdeckschale (10) formschlüssig oder stoffschlüssig miteinander verbunden sind.

4. Beleuchtetes Gurtschloss (1) nach den Ansprüchen 2 oder 3, **dadurch gekennzeichnet, dass** das Lichtstreuelement (12) und die Abdeckschale (10) einteilig ausgebildet sind.

5. Beleuchtetes Gurtschloss (1) nach zumindest einem der vorangehenden Ansprüche, **dadurch gekennzeichnet, dass** die Lichtquelle (6) der Beleuchtungseinrichtung durch zumindest eine LED (25) oder ein LED-Modul gebildet ist.

6. Beleuchtetes Gurtschloss (1) nach Anspruch 1, **dadurch gekennzeichnet, dass** der Lichtleiter (7) einen ringförmig geschlossenen Ringabschnitt (14) aufweist, welcher deckungsgleich zu der ringförmigen Lichtaustrittsöffnung (11) angeordnet ist.

7. Beleuchtetes Gurtschloss (1) nach Anspruch 6, **dadurch gekennzeichnet, dass** der Ringabschnitt (14) des Lichtleiters (7) zumindest teilweise an einer der Sichtseite abgewandten Rückseite des Lichtstreuelementes und/oder an einer der Sichtseite (15) abgewandten Rückseite der Abdeckschale anliegt.

8. Beleuchtetes Gurtschloss (1) nach den Ansprüchen 6 oder 7, **dadurch gekennzeichnet, dass** der Ringabschnitt (14) des Lichtleiters (7) an das Lichtstreuelement (12) oder die Abdeckschale (10) angespritzt ist.

9. Beleuchtetes Gurtschloss (1) nach zumindest einem der Ansprüche 1 bis 8, **dadurch gekennzeichnet, dass** der Lichtleiter (7) auf einer der Lichtaustrittsöffnung (11) abgewandten Unterseite (18) zumindest abschnittsweise eine lichtablenkende Struktur (19) aufweist.

10. Beleuchtetes Gurtschloss (1) nach zumindest einem der Ansprüche 1 bis 9, **dadurch gekennzeichnet, dass** zwischen der Lichtquelle (6) und der Verriegelungsmechanik (3) und/oder zwischen dem Lichtleiter (7) und der Verriegelungsmechanik (3) zumindest abschnittsweise eine lichtundurchlässige Trennwand (17) vorgesehen ist.

11. Beleuchtetes Gurtschloss (1) nach Anspruch 10, **dadurch gekennzeichnet, dass** die Lichtquelle (6) zwischen der Trennwand (17) und dem Schlossgehäuse (2) und der Ringabschnitt (14) des Lichtleiters (7) zwischen der Trennwand (17) und der Abdeckschale (10) angeordnet und fixiert ist.

12. Beleuchtetes Gurtschloss (1) nach den Ansprüchen 10 oder 11, **dadurch gekennzeichnet, dass** die Trennwand (17) einteilig mit der Abdeckschale (10) oder dem Schlossgehäuse (2) verbunden ist.

## Claims

1. An illuminated seat belt buckle (1) for a seat belt, having a buckle housing (2), a locking mechanism (3), an insertion slot (4) for a belt latch of the seat belt, an actuating button (5) for release purposes and having an illuminating device, which has at least one light source (6) and is arranged in the seat belt buckle (1), wherein the buckle housing (2) has a light-permeable and annularly closed light outlet opening (11), from which the light, which is provided by the illuminating device and is coupled-in emerges and which surrounds the actuating button (5) and/or the insertion slot (4) in an encircling manner, wherein the buckle housing (2) has a cover shell (10) arranged at the end face, annularly closed and having an opening for the actuating button (5) and/or the insertion slot (4), wherein the light outlet opening (11) is arranged in the cover shell (10) and the cover shell (10) is connected detachably to the buckle housing (2), **characterized in that** the illuminating device has a light guide (7), which receives the light emitted by the light source (6) and couples it into the light outlet opening (11), wherein the light guide (7) and the light source (6) consisting of a circuit board (24) and at least one LED (25) form an integral assembly (26).

2. The illuminated seat belt buckle (1) according to Claim 1, **characterized in that** the light outlet opening (11) is formed by a light scattering element (12) arranged in the cover shell (10).

3. The illuminated seat belt buckle (1) according to Claim 2, **characterized in that** the light scattering element (12) and the cover shell (10) are connected to one another positively or materially.

4. The illuminated seat belt buckle (1) according to Claims 2 or 3, **characterized in that** the light scattering element (12) and the cover shell (10) are made in one piece.

5. The illuminated seat belt buckle (1) according to at least one of the preceding claims, **characterized in that** the light source (6) of the illuminating device is formed by at least one LED (25) or an LED module.

6. The illuminated seat belt buckle (1) according to Claim 1, **characterized in that** the light guide (7) has an annularly closed annular section (14), which is arranged congruently with the annular light outlet opening (11).

7. The illuminated seat belt buckle (1) according to Claim 6, **characterized in that** the annular section (14) of the light guide (7) at least partially abuts against a back side of the light scattering element facing away from the visible side and/or against a back side of the cover shell facing away from the visible side (15).

8. The illuminated seat belt buckle (1) according to Claims 6 or 7, **characterized in that** the annular section (14) of the light guide (7) is injection-molded on the light scattering element (12) or the cover shell (10).

9. The illuminated seat belt buckle (1) according to at least one of Claims 1 to 8, **characterized in that** the light guide (7) has at least in sections a light-deflecting structure (19) on an underside (18) facing away from the light outlet opening (11).

10. The illuminated seat belt buckle (1) according to at least one of Claims 1 to 9, **characterized in that** at least in sections a light-impermeable dividing wall (17) is provided between the light source (6) and the locking mechanism (3) and/or between the light guide (7) and the locking mechanism (3).

11. The illuminated seat belt buckle (1) according to Claim 10, **characterized in that** the light source (6) is arranged and fixed between the dividing wall (17) and the buckle housing (2) and the annular section (14) of the light guide (7) is arranged and fixed between the dividing wall (17) and the cover shell (10).

12. The illuminated seat belt buckle (1) according to Claims 10 or 11, **characterized in that** the dividing wall (17) is connected in one piece to the cover shell (10) or the buckle housing (2).

## Revendications

1. Serrure de ceinture éclairée (1) pour une ceinture de sécurité, avec un boîtier de serrure (2), un mécanisme de verrouillage (3), une fente d'insertion (4) pour une languette de ceinture de la ceinture de sécurité, un bouton d'actionnement (5) pour le déverrouillage et avec un dispositif d'éclairage comprenant une source de lumière (6) et disposé dans la serrure de ceinture (1), le boîtier de serrure (2) comprenant une ouverture de sortie de lumière (11) transparente et fermée de manière annulaire, par laquelle sort la lumière générée et introduite par le dispositif d'éclairage et qui entoure le bouton d'actionnement (5) et/ou la fente d'insertion (4), le boîtier de serrure (2) comprenant une coque de protection (10) disposée du côté frontal, fermée de manière annulaire et comprenant une ouverture pour le bouton d'actionnement (5) et/ou la fente d'insertion (4), l'ouverture de sortie de lumière (11) étant disposée dans la coque de protection (10) et la coque de protection (10) étant reliée de manière amovible avec le boîtier de serrure (2), **caractérisé en ce que** le dispositif d'éclairage comprend une fibre optique (7) qui absorbe la lumière sortant de la source de lumière et l'introduit dans l'ouverture de sortie de lumière (11), la fibre optique (7) et la source de lumière (6), constituée d'une platine (24) et d'au moins une LED (25), formant une unité de construction intégrée (26).

2. Serrure de ceinture éclairée (1) selon la revendication 1, **caractérisée en ce que** l'ouverture de sortie de lumière (11) est constituée d'un élément de diffusion de lumière (12) disposé dans la coque de protection (10).

3. Serrure de ceinture éclairée (1) selon la revendication 2, **caractérisée en ce que** l'élément de diffusion de lumière (12) et la coque de protection (10) sont reliées entre eux par complémentarité de forme ou par liaison de matière.

4. Serrure de ceinture éclairée (1) selon les revendications 2 ou 3, **caractérisée en ce que** l'élément de diffusion de lumière (12) et la coque de protection (10) sont constituées d'une seule pièce.

5. Serrure de ceinture éclairée (1) selon au moins l'une des revendications précédentes, **caractérisée en ce que** la source de lumière (6) du dispositif d'éclairage est constituée d'au moins une LED (25) ou d'un module à LED.

6. Serrure de ceinture éclairée (1) selon la revendication 1, **caractérisée en ce que** la fibre optique (7) comprend une portion annulaire (14) fermée de manière annulaire, qui est disposée de manière coextensive avec l'ouverture de sortie de lumière annulaire (11).

7. Serrure de ceinture éclairée (1) selon la revendication 6, **caractérisée en ce que** la portion annulaire (14) de la fibre optique (7) s'appuie au moins partiellement contre un côté arrière de l'élément de diffusion de lumière, opposé au côté visible et/ou contre un côté arrière de la coque de protection, opposé au côté visible (15).

8. Serrure de ceinture éclairée (1) selon les revendications 6 ou 7, **caractérisée en ce que** la portion annulaire (14) de la fibre optique (7) est surmoulé par injection sur l'élément de diffusion (12) ou sur la coque de protection (10).

9. Serrure de ceinture éclairée (1) selon au moins l'une des revendications 1 à 8, **caractérisée en ce que** la fibre optique (7) comprend, sur un côté inférieur (18) opposé à l'ouverture de sortie de lumière (11), au moins à certains endroits, une structure déviant la lumière (19).

10. Serrure de ceinture éclairée (1) selon au moins l'une des revendications 1 à 9, **caractérisée en ce que**, entre la source de lumière (6) et le mécanisme de verrouillage (3) et/ou entre la fibre optique (7) et le mécanisme de verrouillage (3) est prévue, au moins à certains endroits, une cloison opaque (17).

11. Serrure de ceinture éclairée (1) selon la revendication 10, **caractérisée en ce que** la source de lumière (6) est disposée et fixée entre la cloison (17) et le boîtier de serrure (2) et la portion annulaire (14) de la fibre optique (7) est disposée et fixée entre la cloison (17) et la coque de protection (10).

12. Serrure de ceinture éclairée (1) selon les revendications 10 ou 11, **caractérisée en ce que** la cloison (17) est reliée d'une seule pièce avec a coque de protection (10) ou le boîtier de serrure (2).
